# EUROPÄISCHE PATENTSCHRIFT

(11) **EP 4 314 971 B1**
(45) Veröffentlichungstag und Bekanntmachung des Hinweises auf die Patenterteilung: **15.01.2025**
(21) Anmeldenummer: 22714392.2
(22) Anmeldetag: 11.03.2022
(51) Int. Cl.: G05B 23/02

(54) **SYSTEM UND VERFAHREN ZUR ZUSTANDSERKENNUNG EINER VORRICHTUNG**
SYSTEM AND METHOD FOR DETECTING A DEVICE STATE
SYSTÈME ET PROCÉDÉ DE DÉTECTION D'UN ÉTAT DE DISPOSITIF

(30) Priorität: 31.03.2021 DE 102021203312
(43) Veröffentlichungstag der Anmeldung: 07.02.2024
(73) Patentinhaber: Rolls-Royce Deutschland Ltd & Co KG, 15827 Blankenfelde-Mahlow (DE)
(72) Erfinder: STANEK, Christian, 15827 Blankenfelde-Mahlow (DE)
(86) Internationale Anmeldenummer: PCT/EP2022/056364
(87) Internationale Veröffentlichungsnummer: WO 2022/207277

(56) Entgegenhaltungen:
- WO-A1-2011/056144
- US-A1- 2007 265 713
- US-A1- 2008 015 726

## Beschreibung

Die vorliegende Offenbarung bezieht sich insbesondere auf ein System und ein Verfahren zur Zustandserkennung einer Vorrichtung.

Regelmäßig ist es notwendig, den Zustand von Vorrichtungen automatisiert zu überwachen. Dazu werden typischerweise Messdaten erfasst, die für den Zustand der Vorrichtung aussagekräftig sind. Hierzu müssen oftmals bestimmte Signaturen in den Messdaten gesucht und analysiert werden. Beispielsweise kann eine Veränderung von Eigenschaften der Signatur auf einen drohenden Ausfall der Vorrichtung hindeuten. Zum Beispiel kann bei einer Vorrichtung in Form einer Antriebsmaschine eine über mehrere Beschleunigungsmanöver hinweg stärker werdende Vibration auf ein zunehmend ausgeschlagenes Lager hinweisen und damit auf einen reparaturbedürftigen Zustand der Vorrichtung. Somit kann durch die Zustandsüberwachung rechtzeitig eine Reparatur eingeleitet werden, noch bevor das Lager versagt und z.B. die Antriebsmaschine blockiert.

Das Auffinden der Signaturen in den Messdaten ist allerdings regelmäßig fehleranfällig. Hierdurch wird der Zustand der entsprechenden Vorrichtung oftmals nicht korrekt erkannt. Ein wichtiger Grund für Fehler bei dem automatisierten Auffinden der Signaturen liegt regelmäßig in fehlerbehafteten, insbesondere durch Messrauschen und/oder allgemein statistische Messungenauigkeiten behafteten Messdaten.

US 2008/015726 A1 betrifft eine Lösung zur Fehlerdiagnose, wobei sobald ein Fehler von einem Fehlerdetektor identifiziert wird, wird der Fehler von einem Fehlerdiagnosegerät analysiert, indem der Fehler mit einer Sammlung von Fehlersignaturen vergleicht wird, die in einer Fehlerdiagnosedatenbank gespeichert sind. Jede Fehlersignatur stellt Prozessbedingungen bzw. Prozessvariablen dar, die repräsentativ für spezifische Fehler sind.

US 2007/265713 A1 betrifft Erkennung einer Anomalie in Daten aus Komponenten eines industriellen Prozesses, wobei ein Vorhersagemodell entsprechend des erfassten Betriebsmodus der jeweiligen Komponente ausgewählt wird und geschätzte Daten unter Verwendung des Vorhersagemodells erzeugt werden. Die geschätzten Daten und die Betriebsdaten werden verglichen und bei Erfüllung eines bestimmten Anomaliekriteriums wird eine Anomalie erkannt.

WO 2011/056144 A1 betrifft ein System zur Fehlerdiagnose für ein Stromnetzsystem, wobei eine Fehlersignaturliste aus Fehlermeldungen eines Überwachungssystems erstellt wird, aus welcher durch einen Serialisierungsprozess eine Fehlersignatursequenz (FSS) gebildet wird. Die Fehlersignatursequenz (FSS) wird dann entsprechend in mehrere Untergruppen unterteilt, um Fehler auf der Ebene des gesamten Systems, der Unterstation oder der Stromkreisleitung zu diagnostizieren.

In einigen Anwendungen, insbesondere im Bereich der Luftfahrt, ist allerdings regelmäßig eine möglichst präzise automatische Zustandserkennung von einer oder mehreren Vorrichtungen nötig, um einen unerwarteten Ausfall einer oder mehrerer Vorrichtungen so gut wie möglich auszuschließen.

Aufgabe der vorliegenden Erfindung ist es, die Erkennung des Zustands einer Vorrichtung mittels Mustererkennung in fehlerbehafteten Messdaten zu verbessern. Gemäß einem Aspekt wird ein System zur automatischen Zustandserkennung einer Vorrichtung bereitgestellt. Das System umfasst eine Signalerfassungseinrichtung zur Erfassung von fehlerbehafteten Messdaten einer die Vorrichtung beschreibenden physikalischen Größe. Beispielsweise umfasst das System einen Sensor zur Erfassung der physikalischen Größe oder erhält Messsignale von einem entsprechenden Sensor der Vorrichtung. Ferner umfasst das System eine Analyseeinheit zum Auffinden eines vorgegebenen Musters in den durch die Signalerfassungseinrichtung erfassten Messdaten, wobei die Analyseeinheit dazu eingerichtet ist, a) mindestens zwei verschiedene Musterabschnitte des vorgegebenen Musters separat voneinander mit den Messdaten zu vergleichen, b) basierend auf dem jeweiligen Vergleich mindestens eine Position von jedem der Musterabschnitte in den Messdaten zu erfassen, c) basierend auf den erfassten Positionen und der Reihenfolge der Positionen der Musterabschnitte das vorgegebene Muster an einer oder mehreren Positionen in den Messdaten zu erkennen und d) basierend auf der einen oder den mehreren Positionen des vorgegebenen Musters den Zustand der Vorrichtung zu ermitteln.

Das basiert auf der Erkenntnis, dass die Erkennung eines vorgegebenen Musters in fehlerbehafteten, insbesondere verrauschten Messdaten häufig zu einer falschen Erkennung des Musters führt, also zur irrtümlichen Erkennung des Musters an einer Position in den Messdaten, an der das Muster tatsächlich nicht vorliegt. Hierzu wird das vorgegebene Muster also in zumindest (oder genau) zwei Abschnitte unterteilt, die unabhängig voneinander in den Messdaten gesucht werden. Werden die Musterabschnitte nach dieser voneinander unabhängigen Suche in der richtigen Reihenfolge (entsprechend der Reihenfolge der Musterabschnitte im vorgegebenen Muster) und z.B. benachbart zueinander in den Messdaten aufgefunden, kann mit besonders hoher Wahrscheinlichkeit davon ausgegangen werden, dass an der entsprechenden Position in den Messdaten das vorgegebene Muster auch tatsächlich vorliegt. Durch die unabhängige Suche kann die Rate der falschen Erkennungen des Musters deutlich reduziert werden. Die Ermittlung des Zustands der Vorrichtung basierend auf der einen oder den mehreren Positionen des vorgegebenen Musters in den Messdaten kann z.B. durch die Analyse der Messdaten an der einen oder den mehreren Positionen erfolgen, z.B. durch einen Vergleich mit einem Schwellenwert, und/oder durch einen Vergleich der Messdaten an mehreren ermittelten Positionen des vorgegebenen Musters untereinander. In einem besonders einfachen Beispiel kann der Zustand der Vorrichtung bereits durch das Erkennen der Position des vorgegebenen Musters in den Messdaten an sich erkannt werden, z.B. wenn das vorgegebene Muster eine Signatur für einen bestimmten Zustand, z.B. einen Defekt darstellt.

Beispielsweise handelt es sich bei der Vorrichtung um eine Batterie. Bei der physikalischen Größe handelt es sich alternativ oder zusätzlich z.B. um eine elektrische Größe, insbesondere eine elektrische Spannung. Batterien, insbesondere solche, die vergleichsweise hohe Stromstärken zum Betrieb einer Antriebsvorrichtung (beispielsweise eines Fahrzeugs, z.B. eines Luftfahrzeugs) bereitstellen, durchlaufen nutzungsabhängige Alterungsprozesse und können bei zunehmendem Alter bzw. starker Nutzung einen Defekt aufweisen. Ferner können auch Produktionsfehler vorliegen. Wird ein solcher Defekt oder Fehler nicht rechtzeitig erkannt, dann kann die Batterie ausfallen und keine Energie mehr bereitstellen. Dem kann mit kurzen Austauschintervallen begegnet werden, was aber mit entsprechenden Standzeiten und einem hohen Aufwand einhergehen kann. Durch das hierin beschriebene System kann hingegen der Zustand der Batterie besonders zuverlässig erkannt werden. Das vorgegebene Muster beschreibt beispielsweise den zeitlichen Verlauf der elektrischen Spannung einer Batteriezelle der Batterie (oder der ganzen Batterie) während eines Entladevorgangs. Durch Auswertung des Messdaten an der einen oder den mehreren erkannten Positionen des vorgegebenen Musters kann der Zustand der Vorrichtung (z.B. der Batterie) besonders präzise ermittelt werden, z.B. indem eine systematische (insbesondere systematisch zunehmende) Abweichung des Verlaufs der Messdaten an der oder den Positionen von dem vorgegebenen Muster erkannt wird. Daraus kann z.B. ermittelt werden, dass der Zustand wartungsbedürftig oder austauschbedürftig ist. Im Allgemeinen kann der Zustand als einer von mehreren vorbestimmten Zuständen ermittelt werden (z.B. von zwei vorbestimmten Zuständen, wie z.B. funktionsfähig und defekt; oder von drei vorbestimmten Zuständen, wie z.B. funktionsfähig, wartungsbedürftig und defekt).

Die Analyseeinheit kann dazu ausgebildet sein, die mindestens zwei verschiedenen Musterabschnitte des vorgegebenen Musters mittels dynamischer Zeitnormierung mit den Messdaten zu vergleichen. Bei der dynamischen Zeitnormierung (engl.: dynamic time warping, DTW) werden Wertefolgen unterschiedlicher Länge aufeinander abgebildet. Hierdurch können z.B. verschieden gestreckte Sequenzen der Messdaten mit dem vorgegebenen Muster verglichen werden. Bei dem Beispiel der Batterie können diese z.B. einem langsamen und einem schnellen Entladevorgang entsprechen.

Optional ist die Analyseeinheit dazu ausgebildet, die dynamische Zeitnormierung auf zumindest einen der mindestens zwei verschiedenen Musterabschnitte des vorgegebenen Musters anzuwenden, um einen (oder mehr) modifizierten Musterabschnitt(e) zu erzeugen. So kann es ausreichen, für einen Typ eines charakteristischen Verlaufs der Messdaten (z.B. einen Entladevorgang der Batterie) lediglich ein vorgegebenes Muster zu speichern.

Ferner kann die Analyseeinheit dazu eingerichtet sein, das Erfassen der mindestens einen Position von jedem der Musterabschnitte mehrmals durchzuführen. Dabei kann/können über die mehrmaligen Durchführungen hinweg zumindest eine oder zumindest zwei Rahmenbedingungen verändert werden und pro Durchführung eine Anzahl an aufgefundenen Positionen des vorgegebenen Musters in den Messdaten ermittelt werden. Eine in den mehreren Durchführungen am häufigsten ermittelte Anzahl an aufgefundenen Positionen kann als Ergebnis für die als am wahrscheinlichsten tatsächlich zutreffende Anzahl an Positionen des vorgegebenen Musters in den Messdaten ermittelt werden. Mögliche Rahmenbedingungen sind z.B. die Breite eines Suchfensters in den Messdaten für den Vergleich mit den Musterabschnitten und/oder eine Anzahl an maximal auffindbaren Positionen der Musterabschnitte und/oder des vorgegebenen Musters.

Optional ist die Vorrichtung Teil eines Luftfahrzeugs. Hier kommen die oben genannten Vorteile besonders zum Tragen.

Die mindestens eine Position von jedem der Musterabschnitte in den Messdaten kann über eine Bestimmung einer minimalen Gesamtabweichung (z.B. einer minimalen Euklidischen Distanz) zwischen dem jeweiligen Musterabschnitt und den Messdaten an mehreren Positionen der Messdaten ermittelt werden. Das erlaubt eine schnelle und präzise Ermittlung.

Bei den Messdaten handelt es sich z.B. um Zeitreihendaten. Die eine oder mehreren Position(en) des vorgegebenen Musters kann/können jeweils einen Zeitpunkt oder einen Zeitraum in den Messdaten angeben.

Das System kann ferner eine Anzeigevorrichtung umfassen. Die Analyseeinheit ist optional dazu ausgebildet, den ermittelten Zustand der Vorrichtung an der Anzeigevorrichtung auszugeben. Alternativ oder zusätzlich ist die Analyseeinheit kommunikativ mit der Vorrichtung verbunden. Die Analyseeinheit ist z.B. dazu ausgebildet, basierend auf dem ermittelten Zustand der Vorrichtung die Vorrichtung zu steuern und/oder abzuschalten.

Optional umfasst die Analyseeinheit ein künstliches neuronales Netzwerk und ist dazu ausgebildet, das künstliche neuronale Netzwerk mittels der einen oder der mehreren Positionen des vorgegebenen Musters in den Messdaten zu trainieren. Auf diese Weise kann ein besonders verlässlich trainiertes neuronales Netzwerk erhalten werden, das eine besonders genaue Ermittlung des Zustands der Vorrichtung erlaubt. Die Positionserkennung des vorgegebenen Musters erlaubt ein automatisches Labelling der Messpunkte, die das Muster definieren. Ein solches Labelling ermöglicht eine automatische Vorbereitung für das Training von neuronalen Netzen

Gemäß einem Aspekt wird ein Verfahren zur automatischen Zustandserkennung einer Vorrichtung bereitgestellt. In dem Verfahren kann das System nach einer beliebigen, hierin beschriebenen Ausgestaltung zur Anwendung kommen. Das Verfahren umfasst das Erfassen, mittels einer Signalerfassungseinrichtung, von fehlerbehafteten, z.B. verrauschten, Messdaten einer die Vorrichtung beschreibenden physikalischen Größe, und das Auffinden, mittels einer Analyseeinheit, eines vorgegebenen Musters in den durch die Signalerfassungseinrichtung erfassten Messdaten. Dieses Auffinden umfasst wiederum das Vergleichen von mindestens zwei verschiedenen Musterabschnitten des vorgegebenen Musters separat voneinander mit den Messdaten, das Erfassen mindestens einer Position von jedem der Musterabschnitte in den Messdaten basierend auf dem jeweiligen Vergleich, das Erkennen des vorgegebenen Musters an einer oder mehreren Positionen in den Messdaten basierend auf den erfassten Positionen und der Reihenfolge der Positionen der Musterabschnitte und das Ermitteln des Zustands der Vorrichtung basierend auf der einen oder den mehreren Positionen des vorgegebenen Musters.

Optional umfasst das Verfahren ferner das Ausgeben, mittels der Analyseeinheit, den ermittelten Zustand der Vorrichtung an einer Anzeigevorrichtung.

Es werden nun beispielhaft Ausführungsformen mit Bezug auf die Figuren beschrieben; in den Figuren zeigen:
- Figur 1: ein Luftfahrzeug in Form eines Flugzeugs mit einer Batterie und einem elektrisch durch die Batterie angetriebenen Propeller;
- Figur 2: eine Vorrichtung und ein System zur automatischen Zustandserkennung der Vorrichtung;
- Figuren 3 und 4: Diagramme mit verschiedenen Messdaten einer elektrischen Spannung der Batterie des Flugzeugs gemäß Fig. 1;
- Figuren 5 und 6: Diagramme zur Erläuterung der Erkennung eines Musters in Messdaten;
- Figuren 7 und 8: jeweils mit verschiedenen Rahmenbedingungen ermittelte Anzahlen von Positionen eines vorgegebenen Musters in den Messdaten gemäß Fig. 3 bzw. 4; und
- Figur 9: ein Verfahren zur automatischen Zustandserkennung einer Vorrichtung.

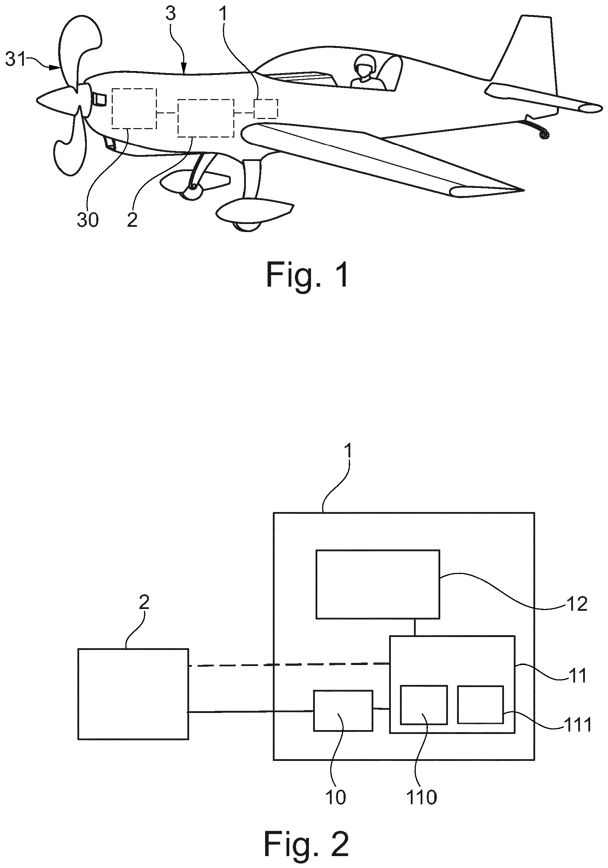

Figur 1 zeigt ein Luftfahrzeug 3 in Form eines elektrisch angetriebenen Flugzeugs. Das Luftfahrzeug 3 umfasst einen Propeller 31, der durch eine elektrische Maschine 30 in Form eines Elektromotors angetrieben ist.

Das Luftfahrzeug 3 umfasst ferner eine Vorrichtung in Form einer Batterie 2. Die elektrische Maschine 30 ist elektrisch mit der Batterie 2 verbunden und wird dadurch mit Energie versorgt. Optional dient die elektrische Maschine 30 als Generator und ist dazu eingerichtet, elektrische Energie an die Batterie 2 bereitzustellen.

Durch Umwelteinflüsse, den Gebrauch und/oder das Alter kann die Batterie 2 einen gegenüber einem ordnungsgemäßen Zustand verschlechterten Zustand aufweisen. Ferner kann die Batterie einen kritischen Zustand aufweisen, der mit einer erhöhten Wahrscheinlichkeit verhältnismäßig zeitnah von einem Defekt gefolgt wird. Um den Zustand der Batterie 2 automatisch zu überwachen, umfasst das Luftfahrzeug 3 ein System 1 zur automatischen Zustandserkennung einer Vorrichtung, im gezeigten Beispiel konkret der Batterie 2.

Figur 2 zeigt in einer schematischen Darstellung die Batterie 2 und das System 1 zur automatischen Zustandserkennung.

Das System 1 umfasst eine Signalerfassungseinrichtung 10 und eine Analyseeinheit 11. In Figur 2 sind diese beiden Komponenten separat dargestellt, sie können aber selbstverständlich auch durch eine gemeinsame Hardware und/oder Software ausgebildet werden.

Die Signalerfassungseinrichtung 10 ist mit der Batterie 2 wirkverbunden, vorliegend derart, dass die Signalerfassungseinrichtung 10 eine Spannung der Batterie 2, insbesondere eine Spannung einer Zelle oder, wie im gezeigten Beispiel, die Spannung aller Batteriezellen (oder jeweils eine Spannung jeder Zelle) der Batterie erfassen kann. Diese Zellspannung zeigt den Ladezustand der Zelle an. Bei Abgabe einer bestimmten Leistung durch die Zelle sinkt die Spannung mit einem charakteristischen Verlauf. Abweichungen von diesem charakteristischen Verlauf können eine Verschlechterung des Zustands der Zelle anzeigen.

Im Allgemeinen ist die Signalerfassungseinrichtung 10 dazu ausgebildet, Messdaten einer physikalischen Größe (der Zellspannung) einer Vorrichtung (der Batterie 2) zu erfassen.

Die Signalerfassungseinrichtung 10 stellt die erfassten Messdaten an die Analyseeinheit 11 bereit. Die Signalerfassungseinrichtung 10 umfasst hierzu vorliegend einen Analog-zu-Digital-Wandler. Die Analyseeinheit 11 ist zum Auffinden eines vorgegebenen Musters in den durch die Signalerfassungseinrichtung 10 erfassten Messdaten ausgebildet, indem sie, wie nachfolgend noch näher erläutert werden wird, mindestens zwei verschiedene Musterabschnitte des vorgegebenen Musters separat voneinander mit den Messdaten vergleicht, basierend auf dem jeweiligen Vergleich mindestens eine Position von jedem der Musterabschnitte in den Messdaten erfasst, basierend auf den erfassten Positionen und der Reihenfolge der Positionen der Musterabschnitte das vorgegebene Muster an einer oder mehreren Positionen in den Messdaten erkennt und basierend auf der einen oder den mehreren Positionen des vorgegebenen Musters den Zustand der Vorrichtung ermittelt.

Hierzu umfasst die Analyseeinheit 11 im gezeigten Beispiel einen Prozessor 110 und einen Speicher 111 zum Speichern von durch den Prozessor ausführbaren Anweisungen.

Das System 1 umfasst ferner eine (optionale) Anzeigevorrichtung 12 zur Anzeige des durch die Analyseeinheit 11 ermittelten Zustands.

Optional ist die Analyseeinheit 11 kommunikativ mit der Vorrichtung (hier der Batterie 2) verbunden. Die Analyseeinheit 11 ist dazu ausgebildet, basierend auf dem ermittelten Zustand der Vorrichtung (hier der Batterie 2) die Vorrichtung zu steuern, insbesondere zu regeln. Beispielsweise ist die Analyseeinheit 11 dazu ausgebildet, basierend auf dem ermittelten Zustand der Vorrichtung (hier der Batterie 2) die Vorrichtung abzuschalten, z.B. einen die Vorrichtung einschließenden elektrischen Stromkreis zu öffnen.

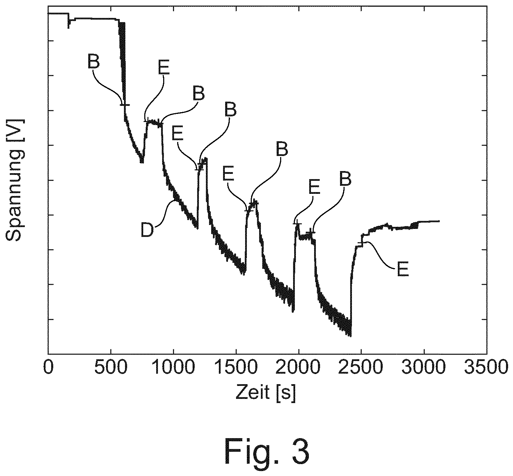

Figur 3 zeigt Messdaten D der Zellspannung der Batterie 2 über eine Zeitspanne eines Fluges des Luftfahrzeugs 3. Mehrmals, konkret fünf Mal, wurde über einen Zeitraum voller Schub angefordert, was jeweils zu einer Entnahme von Energie aus der Batterie 2 geführt hat. Dies ist im gezeigten Diagramm durch fünf charakteristische Signaturen erkennbar. Die Signaturen erstrecken sich jeweils von einem Beginn B zu einem Ende E. Der genaue Verlauf dieser Signaturen, z.B. im Vergleich untereinander und/oder im Vergleich mit einer Referenzsignatur, erlaubt Rückschlüsse auf den Zustand der Batterie 2, insbesondere ob die Batterie wartungsbedürftig ist oder sich einem Ende der Lebensdauer nähert.

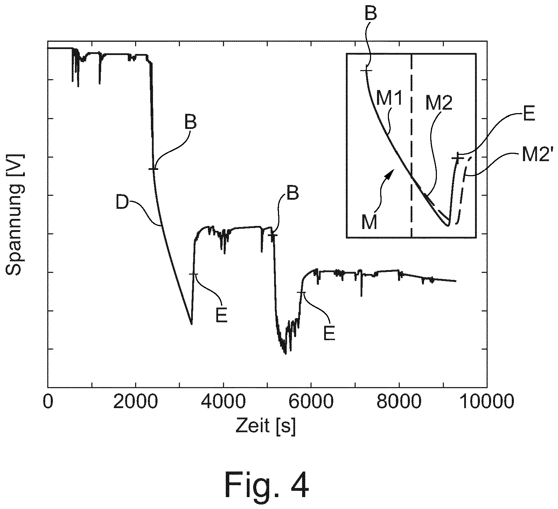

Figur 4 zeigt Messdaten D der Zellspannung der Batterie 2 über eine Zeitspanne eines anderen Fluges des Luftfahrzeugs 3. Dort wurde zwei Mal voller Schub angefordert.

Rechts oben im Diagramm der Figur 4 ist das vorgegebene Muster M dargestellt, welches durch die Analyseeinheit 11 mit den Messdaten D verglichen wird, um die Positionen des Musters M in den Messdaten D zu ermitteln, in Figur 3 die fünf Positionen, in Figur 4 die beiden Positionen. Dabei ist auch eine Unterteilung des vorgegebenen Musters M in zwei hälftige Musterabschnitte M1, M2 gezeigt.

Bei dem Vergleich wird z.B. ein DTW-Algorithmus angewandt, um verschieden lange Anforderungen von Schub und/oder Anforderungen von Schub geringer als voller Schub zu berücksichtigen und/oder um verschiedene Absolutwerte der Messdaten zu berücksichtigen. Beispielsweise mittels DTW wird der jeweilige Musterabschnitt M1, M2 (alternativ oder zusätzlich das ganze vorgegebene Muster M) skaliert, zum Beispiel entlang der Zeitachse und/oder entlang der Achse des Messwerts zum jeweiligen Zeitpunkt, um einen modifizierten Musterabschnitt M2' zu erhalten.

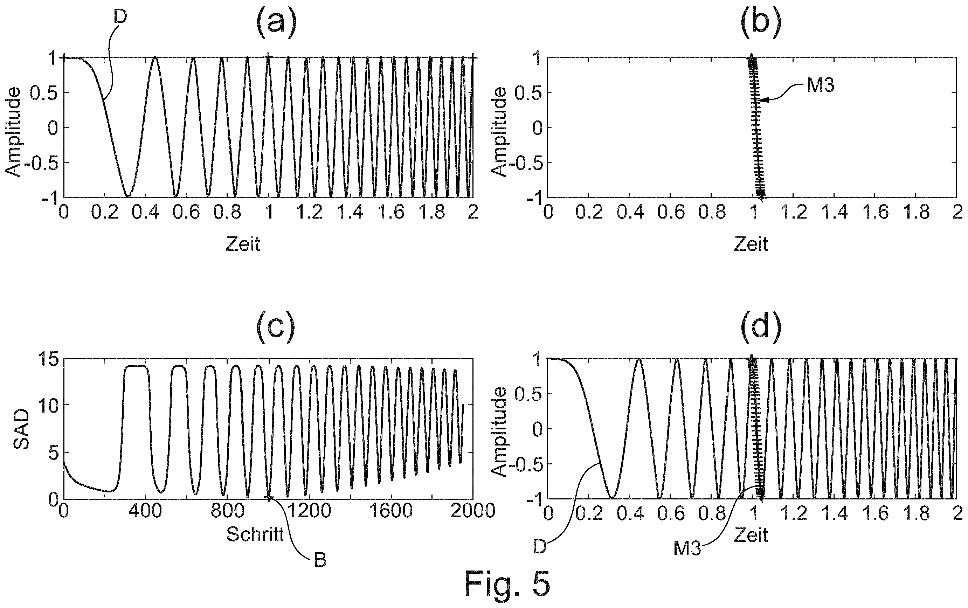

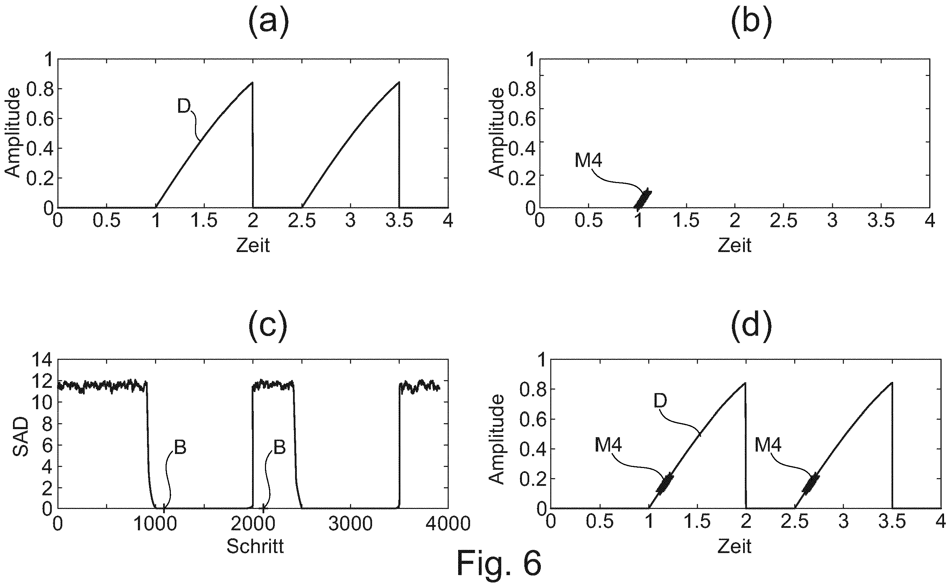

Die Suche der einzelnen Musterabschnitte M1, M2 in den Messdaten D wird nachfolgend anhand der Figuren 5 und 6 erläutert, wobei zur Illustration ganz unterschiedlich verlaufende Messdaten D dargestellt sind, jeweils im Diagramm (a) der Figuren 5 und 6. Beispielhaft ist dort jeweils eine Amplitude einer physikalischen Größe gegen die Zeit aufgetragen.

Das jeweilige Diagramm (b) zeigt einen Musterabschnitt M3, M4 eines vorgegebenen Musters. Um diesen Musterabschnitt M3, M4 in den Messdaten D einmal oder mehrmals wiederzufinden, wird der Musterabschnitt M3, M4 schrittweise mit den Messdaten D verglichen (mit jedem Abschnitt der Messdaten D). So wird die Gesamtabweichung des Musterabschnitts M3, M4 von einem bestimmten Abschnitt der Messdaten D ermittelt, z.B. in Form der Summe der absoluten Abweichungen, SAD, wie im jeweiligen Diagramm (c) gezeigt. Die Stelle, an der die Gesamtabweichung ein Minimum aufweist, entspricht der wahrscheinlichsten Position des Musterabschnitts M3, M4 in den Messdaten D. Werden mehrere Vorkommen des Musterabschnitts M3, M4 ermittelt und/oder in der Ermittlung zugelassen, so sind die wahrscheinlichsten Positionen davon die entsprechende Anzahl der geringsten Minima. In den Figuren 5 und 6 ist der jeweilige Beginn B eines solchen in den Messdaten erkannten Musterabschnitts M3, M4 eingezeichnet.

Das jeweilige Diagramm (d) zeigt die Messdaten D mit den darübergelegten Musterabschnitten M3, M4.

Diese Suche nach einer oder mehreren Positionen der Musterabschnitte M3, M4 wird durch die Analyseeinheit 11 für sämtliche (z.B. zwei) Musterabschnitte M1-M4 der Messdaten D durchgeführt. Dabei können mitunter mehr Vorkommnisse der separaten Musterabschnitte M1-M4 in den Messdaten D gefunden werden als tatsächlich vorhanden. Wird allerdings eine benachbarte Folge der (sämtlicher) Musterabschnitte M1-M4 des vorgegebenen Musters M in der richtigen Reihenfolge ermittelt, dann ist dies ein besonders verlässlicher Hinweis für das Vorliegen des vorgegebenen Musters. Hierbei kann jedem Musterabschnitt M1-M4 ein Zeichen zugeordnet werden, sodass die Reihenfolge der Musterabschnitte M1-M4 durch die Analyseeinheit 11 in Form einer Zeichenkette verarbeitet werden kann. Das erlaubt eine besonders effiziente und schnelle Verarbeitung.

Mit erneutem Bezug auf Figur 4 wird also zweimal die Folge M1, M2 aufgefunden werden. Diese Berechnung ist mittels des Prozessors 110 automatisch und schnell durchführbar, sowie, anders als bei einem Einsatz eines neuronalen Netzwerks zu diesem Zweck, nachvollziehbar und reproduzierbar. Zudem ist hierzu kein Training notwendig. Der Algorithmus ist daher regelmäßig besser als ein auf neuronalen Netzen basierender Algorithmus für eine Zulassung im Luftfahrtbereich geeignet. Für ein Training eines neuronalen Netzwerks muss demgegenüber zudem regelmäßig eine hohe Anzahl an "fehlerhaften" und "guten" Ereignissen vorliegen.

Die Positionen des vorgegebenen Musters M in den Messdaten D wird z.B. durch den jeweiligen Beginn B und/oder das jeweilige Ende E angegeben (insbesondere den entsprechenden Zeitpunkt).

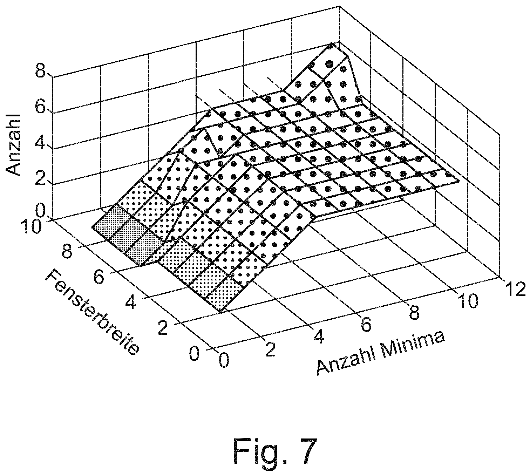

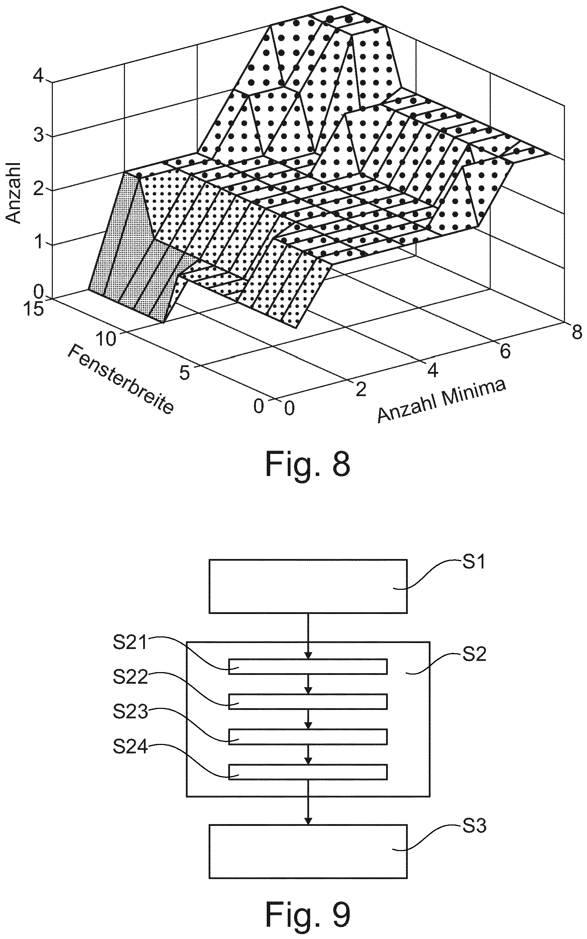

Weiter präzisiert werden kann die Suche durch eine Variation von Rahmenbedingungen bei der Suche. So zeigen die Figuren 7 und 8 die jeweils ermittelten Anzahlen an benachbarten Folgen der (sämtlicher) Musterabschnitte M1-M2 des vorgegebenen Musters M in der richtigen Reihenfolge bei einer Suche mit einer variierten Anzahl der erlaubten maximalen Minima und der Fensterbreite der Messdaten D und/oder des Musterabschnitts M1-M2 bei dem Vergleich mit dem jeweiligen Musterabschnitt M1-M2. Hierbei handelt es sich allerdings lediglich um Beispiele für mögliche Rahmenbedingungen.

Dabei zeigt sich in beiden Fällen ein Plateau bei einer Anzahl von fünf (Figur 7) bzw. zwei (Figur 8) erkannten Vorkommen des vorgegebenen Musters M in den Messdaten D. Die durch das Plateau angezeigte Anzahl kann als Ergebnis für die Anzahl der ermittelten Vorkommen des vorgegebenen Musters M in den Messdaten D verwendet werden. So wird eine besonders robuste Ermittlung dieser Anzahl ermöglicht. Auf diese Weise können falsch positiv ermittelte Muster weitgehend oder vollständig ausgeschlossen werden. Das gilt insbesondere auch wenn die gewonnen Messdaten D verrauscht sind, z.B. durch Umwelteinflüsse oder durch elektromagnetische Störsignale von umgebenden Komponenten, da diese falsche Minima hervorrufen können.

Da so die Anzahl robust ermittelt werden kann, ist es möglich, die entsprechenden Positionen in den Messdaten besonders genau zu bestimmen. Somit kann die Analyseeinheit 11 dazu ausgebildet sein, mit variierten Rahmenbedingungen die Suche mehrmals durchzuführen und dann in den gewonnenen Ergebnissen der Anzahl der Positionen nach einem Plateau und/oder einem am häufigsten vorkommenden Wert suchen.

Figur 9 zeigt ein Verfahren zur automatischen Zustandserkennung einer Vorrichtung (z.B. der Batterie 2), umfassend:
Schritt S1: Erfassen, mittels der Signalerfassungseinrichtung 10, von fehlerbehafteten Messdaten D einer die Vorrichtung (Batterie 2) beschreibenden physikalischen Größe (z.B. Zellspannung).
Schritt S2: Auffinden, mittels der Analyseeinheit 11, des vorgegebenen Musters M in den durch die Signalerfassungseinrichtung 10 erfassten Messdaten D. Der Schritt S2 umfasst die Unterschritte S21 bis S24.
Schritt S21: Vergleichen von mindestens zwei verschiedenen Musterabschnitten M1-M4 des vorgegebenen Musters M separat voneinander mit den Messdaten D.
Schritt S22: Erfassen mindestens einer Position von jedem der Musterabschnitte M1-M4 in den Messdaten D basierend auf dem jeweiligen Vergleich.
Schritt S23: Erkennen des vorgegebenen Musters M an einer oder mehreren Positionen in den Messdaten D basierend auf den erfassten Positionen und der Reihenfolge der Positionen der Musterabschnitte M1-M4.
Schritt S24: Ermitteln des Zustands der Vorrichtung (Batterie 2) basierend auf der einen oder den mehreren Positionen des vorgegebenen Musters M.
Schritt S3: Ausgeben, mittels der Analyseeinheit 11, den ermittelten Zustand der Vorrichtung (Batterie 2) an einer Anzeigevorrichtung 12 und/oder Steuern der Vorrichtung (Batterie 2) basieren auf dem ermittelten Zustand.

Vorstehend wurde insbesondere auf eine Zellenspannung einer Batterie 2 eingegangen, wobei auch z.B. eine Messung von anderen elektrischen oder mechanischen Größen, z.B. von Phasenströmen, einer (anderen) DC- oder AC-Spannung, einer Stromstärke, einer Drehzahl und/oder eines Drehmoments als jeweilige physikalische Größe möglich ist, z.B. von E-Luftfahrantrieben, und/oder einer abgeleiteten Größe wie mechanische Leistung, elektrische Leistung, Wirkleistung, Scheinleistung, Cosinus Phi, Wirkungsgrad und/oder eine Regelgröße der jeweiligen Vorrichtung. Als Vorrichtungen sind bei E-Luftfahrantrieben insbesondere denkbar: Motor, Inverter, Batterie, Energie/Leistungsverteilungseinrichtung und/oder Controller. Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen.

### Bezugszeichenliste

- 1: System
- 10: Signalerfassungseinrichtung
- 11: Analyseeinheit
- 110: Prozessor
- 111: Speicher
- 12: Anzeigevorrichtung

- 2: Batterie

- 3: Luftfahrzeug
- 30: elektrische Maschine
- 31: Propeller

- B: Beginn
- D: Messdaten
- E: Ende
- M: vorgegebenes Muster
- M2': modifizierter Musterabschnitt
- M1-M4: Musterabschnitt

## Patentansprüche

1. System (1) zur automatischen Zustandserkennung einer Vorrichtung (2), umfassend:
- eine Signalerfassungseinrichtung (10) zur Erfassung von fehlerbehafteten Messdaten (D) einer die Vorrichtung (2) beschreibenden physikalischen Größe; und
- eine Analyseeinheit (11) zum Auffinden eines vorgegebenen Musters (M) in den durch die Signalerfassungseinrichtung (10) erfassten Messdaten (D), wobei die Analyseeinheit (11) dazu eingerichtet ist,
∘ mindestens zwei verschiedene Musterabschnitte (M1-M4) des vorgegebenen Musters (M) separat voneinander mit den Messdaten (D) zu vergleichen,
∘ basierend auf dem jeweiligen Vergleich mindestens eine Position von jedem der Musterabschnitte (M1-M4) in den Messdaten (D) zu erfassen,
∘ basierend auf den erfassten Positionen und der Reihenfolge der Positionen der Musterabschnitte (M1-M4) das vorgegebene Muster (M) an einer oder mehreren Positionen in den Messdaten (D) zu erkennen und
∘ basierend auf der einen oder den mehreren Positionen des vorgegebenen Musters (M) den Zustand der Vorrichtung (2) zu ermitteln.

2. System (1) nach Anspruch 1, wobei die Vorrichtung (2) eine Batterie ist und die physikalische Größe eine elektrische Spannung ist.

3. System (1) nach Anspruch 1 oder 2, wobei die Analyseeinheit (11) dazu ausgebildet ist, die mindestens zwei verschiedenen Musterabschnitte (M1-M4) des vorgegebenen Musters (M) mittels dynamischer Zeitnormierung mit den Messdaten (D) zu vergleichen.

4. System (1) nach Anspruch 3, wobei die Analyseeinheit (11) dazu ausgebildet ist, die dynamische Zeitnormierung auf zumindest einen der mindestens zwei verschiedenen Musterabschnitte (M1-M4) des vorgegebenen Musters (M) anzuwenden, um zumindest einen modifizierten Musterabschnitt (M2`) zu erzeugen.

5. System (1) nach einem der vorhergehenden Ansprüche, wobei die Analyseeinheit (11) ferner dazu eingerichtet ist, das Erfassen der mindestens einen Position von jedem der Musterabschnitte (M1-M4) mehrmals durchzuführen, wobei über die mehrmaligen Durchführungen hinweg zumindest zwei Rahmenbedingungen verändert werden und pro Durchführung eine Anzahl an aufgefundenen Positionen des vorgegebenen Musters (M) in den Messdaten (D) ermittelt wird, wobei eine in den mehreren Durchführungen am häufigsten ermittelte Anzahl an aufgefundenen Positionen als Ergebnis für die Anzahl an Positionen des vorgegebenen Musters (M) in den Messdaten (D) ermittelt wird.

6. System (1) nach einem der vorhergehenden Ansprüche, wobei die Vorrichtung (2) Teil eines Luftfahrzeugs (3) ist.

7. System (1) nach einem der vorhergehenden Ansprüche, wobei die mindestens eine Position von jedem der Musterabschnitte (M1-M4) in den Messdaten (D) über eine Bestimmung einer minimalen Gesamtabweichung zwischen dem jeweiligen Musterabschnitt (M1-M4) und den Messdaten (D) an mehreren Positionen der Messdaten (D) ermittelt wird.

8. System (1) nach einem der vorhergehenden Ansprüche, wobei die Messdaten (D) Zeitreihendaten sind und die eine oder mehreren Positionen des vorgegebenen Musters (M) jeweils einen Zeitpunkt oder Zeitraum in den Messdaten (D) angeben.

9. System (1) nach einem der vorhergehenden Ansprüche, ferner umfassend eine Anzeigevorrichtung (12), wobei die Analyseeinheit (11) dazu ausgebildet ist, den ermittelten Zustand der Vorrichtung (2) an der Anzeigevorrichtung (12) auszugeben.

10. System (1) nach einem der vorhergehenden Ansprüche, wobei die Analyseeinheit (11) ein künstliches neuronales Netzwerk umfasst und dazu ausgebildet ist, das künstliche neuronale Netzwerk mittels der einen oder der mehreren Positionen des vorgegebenen Musters (M) in den Messdaten (D) zu trainieren.

11. Verfahren zur automatischen Zustandserkennung einer Vorrichtung (2), umfassend:
- Erfassen (S1), mittels einer Signalerfassungseinrichtung (10), von fehlerbehafteten Messdaten (D) einer die Vorrichtung (2) beschreibenden physikalischen Größe;
- Auffinden (S2), mittels einer Analyseeinheit (11), eines vorgegebenen Musters (M) in den durch die Signalerfassungseinrichtung (10) erfassten Messdaten (D), umfassend:
∘ Vergleichen (S21) von mindestens zwei verschiedenen Musterabschnitten (M1-M4) des vorgegebenen Musters (M) separat voneinander mit den Messdaten (D),
∘ Erfassen (S22) mindestens einer Position von jedem der Musterabschnitte (M1-M4) in den Messdaten (D) basierend auf dem jeweiligen Vergleich,
∘ Erkennen (S23) des vorgegebenen Musters (M) an einer oder mehreren Positionen in den Messdaten (D) basierend auf den erfassten Positionen und der Reihenfolge der Positionen der Musterabschnitte (M1-M4) und
∘ Ermitteln (S24) des Zustands der Vorrichtung (2) basierend auf der einen oder den mehreren Positionen des vorgegebenen Musters (M).

12. Verfahren nach Anspruch 11, ferner umfassend: Ausgeben (S3), mittels der Analyseeinheit (11), den ermittelten Zustand der Vorrichtung (2) an einer Anzeigevorrichtung (12).

## Claims

1. System (1) for automatic state detection of a device (2), comprising:
- a signal detection device (10) for detecting erroneous measurement data (D) of a physical quantity describing the device (2); and
- an analysis unit (11) for finding a predetermined pattern (M) in the measurement data (D) acquired by the signal detection device (10), wherein the analysis unit (11) is designed to
∘ compare at least two different pattern sections (M1-M4) of the predetermined pattern (M) separately with the measurement data (D),
∘ based on the respective comparison, record at least one position of each of the pattern sections (M1-M4) in the measurement data (D),
∘ based on the recorded positions and the sequence of the positions of the pattern sections (M1-M4), recognize the predetermined pattern (M) at one or more positions in the measurement data (D) and
∘ determine the state of the device (2) based on the one or more positions of the predetermined pattern (M).

2. System (1) according to Claim 1, wherein the device (2) is a battery and the physical quantity is an electrical voltage.

3. System (1) according to Claim 1 or 2, wherein the analysis unit (11) is designed to compare the at least two different pattern sections (M1-M4) of the predetermined pattern (M) with the measurement data (D) by means of dynamic time warping.

4. System (1) according to Claim 3, wherein the analysis unit (11) is designed to apply the dynamic time warping to at least one of the at least two different pattern sections (M1-M4) of the predetermined pattern (M) in order to generate at least one modified pattern section (M2').

5. System (1) according to one of the preceding claims, wherein the analysis unit (11) is further designed to perform the detection of the at least one position of each of the pattern sections (M1-M4) several times, wherein at least two framework conditions are changed over the multiple executions and a number of found positions of the predetermined pattern (M) in the measurement data (D) is determined for each execution, wherein a number of found positions determined most frequently in the multiple executions is determined as the result for the number of positions of the predetermined pattern (M) in the measurement data (D).

6. System (1) according to one of the preceding claims, wherein the device (2) is part of an aircraft (3).

7. System (1) according to one of the preceding claims, wherein the at least one position of each of the pattern sections (M1-M4) in the measurement data (D) is determined by determining a minimum total deviation between the respective pattern section (M1-M4) and the measurement data (D) at a plurality of positions of the measurement data (D).

8. System (1) according to one of the preceding claims, wherein the measurement data (D) are time series data and the one or more positions of the predetermined pattern (M) each indicate a point in time or time period in the measurement data (D).

9. System (1) according to one of the preceding claims, further comprising a display device (12), wherein the analysis unit (11) is designed to output the determined state of the device (2) on the display device (12).

10. System (1) according to one of the preceding claims, wherein the analysis unit (11) comprises an artificial neural network and is designed to train the artificial neural network by means of the one or more positions of the predetermined pattern (M) in the measurement data (D).

11. Method for automatic state detection of a device (2), comprising:
- detecting (S1), by means of a signal detection device (10), erroneous measurement data (D) of a physical quantity describing the device (2);
- finding (S2), by means of an analysis unit (11), a predetermined pattern (M) in the measurement data (D) acquired by the signal detection device (10), comprising:
∘ comparing (S21) at least two different pattern sections (M1-M4) of the predetermined pattern (M) separately with the measurement data (D),
∘ detecting (S22) at least one position of each of the pattern sections (M1-M4) in the measurement data (D) based on the respective comparison,
∘ detecting (S23) the predetermined pattern (M) at one or more positions in the measurement data (D) based on the detected positions and the order of the positions of the pattern sections (M1-M4) and
∘ determining (S24) the state of the device (2) based on the one or more positions of the predetermined pattern (M).

12. Method according to Claim 11, further comprising: outputting (S3), by means of the analysis unit (11), the determined state of the device (2) on a display device (12).

## Revendications

1. Système (1) de détection automatique d'un état de dispositif (2), comprenant :
- un moyen d'acquisition de signal (10) pour acquérir des données de mesure (D) défectueuses d'une variable physique caractérisant le dispositif (2) ; et
- une unité d'analyse (11) pour identifier un modèle spécifié (M) dans les données de mesure (D) acquises par le moyen d'acquisition de signal (10), l'unité d'analyse (11) étant conçue pour
∘ comparer au moins deux sections de modèle différentes (M1-M4) du modèle spécifié (M) séparément les unes des autres aux données de mesure (D),
∘ déterminer, sur la base de la comparaison respective, au moins une position de chacune des sections de modèle (M1-M4) dans les données de mesure (D),
∘ détecter, sur la base des positions déterminées et de l'ordre des positions des sections de modèle (M1-M4), le modèle spécifié (M) au niveau d'une ou plusieurs positions dans les données de mesure (D) et
∘ déterminer, sur la base d'une ou de plusieurs positions du modèle spécifié (M), l'état du dispositif (2).

2. Système (1) selon la revendication 1, dans lequel le dispositif (2) est une batterie et la variable physique est une tension électrique.

3. Système (1) selon la revendication 1 ou 2, dans lequel l'unité d'analyse (11) est conçue pour comparer les au moins deux sections de modèle différentes (M1-M4) du modèle spécifié (M) avec les données de mesure (D) au moyen d'une normalisation temporelle dynamique.

4. Système (1) selon la revendication 3, dans lequel l'unité d'analyse (11) est conçue pour appliquer la normalisation temporelle dynamique à au moins l'une des au moins deux sections de modèle différentes (M1-M4) du modèle spécifié (M) afin de générer au moins une section de modèle modifiée (M2').

5. Système (1) selon l'une des revendications précédentes, dans lequel l'unité d'analyse (11) est en outre conçue pour effectuer plusieurs fois la détection de l'au moins une position de chacune des sections de modèle (M1-M4), au moins deux conditions générales étant modifiées au cours des exécutions multiples et un nombre de positions identifiées du modèle (M) spécifié étant déterminé dans les données de mesure (D) pour chaque exécution, un nombre de positions identifiées déterminé le plus souvent dans les exécutions multiples étant déterminé comme résultat pour le nombre de positions du modèle spécifié (M) dans les données de mesure (D).

6. Système (1) selon l'une des revendications précédentes, dans lequel le dispositif (2) fait partie d'un aéronef (3).

7. Système (1) selon l'une des revendications précédentes, dans lequel l'au moins une position de chacune des sections de modèle (M1-M4) dans les données de mesure (D) est déterminée via une détermination d'un écart total minimum entre la section de modèle (M1-M4) respective et les données de mesure (D) à plusieurs positions des données de mesure (D).

8. Système (1) selon l'une des revendications précédentes, dans lequel les données de mesure (D) sont des données de série temporelle et les une ou plusieurs positions du modèle spécifié (M) indiquent chacune un moment ou une période dans les données de mesure (D).

9. Système (1) selon l'une des revendications précédentes, comprenant en outre un dispositif d'affichage (12), l'unité d'analyse (11) étant conçue pour délivrer l'état déterminé du dispositif (2) sur le dispositif d'affichage (12).

10. Système (1) selon l'une des revendications précédentes, dans lequel l'unité d'analyse (11) comprend un réseau neuronal artificiel et est conçue pour entraîner le réseau neuronal artificiel au moyen de l'une ou des plusieurs positions du modèle spécifié (M) dans les données de mesure (D).

11. Procédé de détection automatique d'un état de dispositif (2), comprenant :
- L'acquisition (S1), à l'aide d'un moyen d'acquisition de signal (10), de données de mesure défectueuses (D) d'une variable physique caractérisant le dispositif (2) ;
- L'identification (S2), au moyen d'une unité d'analyse (11), d'un modèle spécifié (M) dans les données de mesure (D) acquises par le moyen d'acquisition de signal (10), comprenant :
∘ La comparaison (S21) d'au moins deux sections de modèle différentes (M1-M4) du modèle spécifié (M) séparément les unes des autres aux données de mesure (D)
∘ La détermination (S22) d'au moins une position de chacune des sections de modèle (M1-M4) dans les données de mesure (D) sur la base de la comparaison respective,
∘ La détection (S23) du modèle spécifié (M) au niveau d'une ou de plusieurs positions dans les données de mesure (D) sur la base des positions déterminées et de l'ordre des positions des sections de modèle (M1-M4) et
∘ La détermination (S24) de l'état du dispositif (2) sur la base de la ou des positions du modèle spécifié (M).

12. Procédé selon la revendication 11, comprenant en outre : l'émission (S3), au moyen de l'unité d'analyse (11), de l'état déterminé du dispositif (2) à un dispositif d'affichage (12).
